# EUROPEAN PATENT APPLICATION

(11) **EP 1 426 181 A1**
(43) Date of publication of application: **09.06.2004**
(21) Application number: 03027930.1
(22) Date of filing: 04.12.2003
(51) Int. Cl.: B32B 27/32

(54) **Polyolefin packaging film**

(30) Priority: 06.12.2002 DK 200201878
(71) Applicant: NewPack Consulting ApS, 5000 Odense C (DK)
(72) Inventor: Rasmussen, Torben, 5000 Odense C (DK)
(74) Representative: Holme, Edvard

(57) **Abstract**

A polyolefin packaging film of the kind that comprises an outer layer and an inner layer that both contain a thermoplastic polyolefin, and wherein the Tm of the inner layer is lower than the Tg of the outer layer, and wherein at least 50w% of the total polyolefin content of the outer layer is composed of at least one cycloolefin copolymer (COC), enabling high packaging rates and tightly-closing sealings on sealing of especially foodstuff packagings. The high Tg of the outer layer enables utilization of very high sealing temperatures without the film melting and adhering to the sealer bars and provides good stretch stability and cutting ability. Preferably the outer layer, or both the outer layer and the inner layer contain a cycloolefin copolymer and by means of different films inserted between the outer layer and the inner layer, the properties of the packaging film, such as e.g. tensile strength, oxygen barrier, water vapour barrier, thickness, and stretchability, can be designed for the desired purpose. The packaging film is co-extruded either by blown or flat sheet co-extrusion and is especially used for packing of foodstuff.

## Description

The invention relates to a polyolefin packaging film of the kind that comprises an outer layer and an inner layer wherein the inner layer and outer layer have a content of a thermoplastic polyolefin.

The sealing together of two thermoplastic films placed adjoining each other in packaging machinery between two e.g. electrically heated sealer bars at fixed temperature is a known technology for e.g. packing frozen chickens, vacuum packing processed food such as e.g. sliced cold cuts or other meat products that e.g. are packed in an inert atmosphere.

The hot sealer bars force e.g. a mechanical or pneumatic pressure on the areas of the two films to be sealed together. Thereby the two thermoplastic materials are softened and merge for a sufficiently long period of time for a sealing together of the materials to take place. After completed sealing the sealer bars are removed so that the sealed films can be detached and the tightly packaged item can be sent on in the packing process for e.g. cutting and packing in transport packagings.

However this process has at least two significant disadvantages. First, melted thermoplastic polymer from the films tends to adhere to and soil the sealer bars. In the prior art, attempts to avoid this have been made by e.g. coating the sealer bars with e.g. polytetrafluoroethylene (PTFE) or using other sealing methods such as e.g. impulse sealing with resulting low packaging rates. Furthermore it is desirable to reduce the cold and hot plastic deformation. A soft packaging film will partly be stretched when it is drawn forward on the packaging machine, and a packaging film with a low softening point will partly risk getting soft and stretched unintentionally in the heat sealing. This can result in the film and thereby the seals becoming very difficult to cut and separate on the packaging machine.

The quality of the sealing and the utilization ratio of the packaging machinery depend on many different operating parameters. An example is heating parameters, such as sealer bar temperature, sealing time, sealing pressure, cooling period of sealed seam, and the physical and chemical properties of the thermoplastic film, such as chemical composition, softening point (Tg), crystalline melting point (Tm), elasticity, ductility, and shrinkability.

In prior art the condition for a reliable sealing and adherence is that the heat from the sealer bars penetrate the films to be sealed together, which at the same time increases the risk of the films sticking to the sealer bars and the sealed seam being too weak.

However, a profitable production economy depends on how many units are processed per unit of time. This can e.g. be expressed in terms of packaging rates. The higher sealing temperature that can be used, the faster sealing can occur and thereby packing of a unit such as foodstuff.

However if the sealing temperature is increased so that the film begins to adhere to the bars, the above problems quickly occur with the thermoplastic polymers that are typically used today, and at worst the production line must be stopped to clean a set of sealing bars of melt remainder, or a number of units must be discarded because the film has shrunk or permanently deformed after curing so that the sealing is not tight.

To avoid these disadvantages persons skilled in the art use e.g. laminated plastics containing biaxially oriented polymer film. For example biaxially oriented polyamide-6 (OPA with Tm of about 220°C) can be bonded to e.g. polyethylene (PE with e.g. Tm of about 95°C) by means of a two-component polyurethane adhesive. OPA is here relatively rigid (Modulus of elasticity = 2,000 - 2,500 MPa at 23°C and 50% relative humidity (Rh)), and the OPA and thereby the laminate maintain temperature stability and stretch stability at temperatures near the melting point of OPA. However, this laminate requires a total of three steps in the production process and is relatively expensive to produce.

The object of the present invention is to provide a co-extruded polyolefin plastic film of the kind mentioned in the opening paragraph for packing especially foodstuff, that can be sealed to itself or to another thermoplastic polymer such as a foodstuff packaging part at high temperatures without the film adhering to the sealer bars during the sealing process.

A second object of the present invention is to provide a polyolefin packaging film of the kind mentioned in the opening paragraph that is not plastically deformed significantly and unintentionally and that is relatively easy and quick to cut on the packaging machine.

A third object of the present invention is to provide an environmentally acceptable packaging film of the kind mentioned in the opening paragraph that can be produced thinner than hitherto known laminated plastics and film having corresponding packaging properties.

A fourth object of the present invention is to provide a simple method of producing a polyolefin packaging film of the kind mentioned in the opening paragraph.

A fifth object of the present invention is to provide an inexpensive polyolefin packaging film of the kind mentioned in the opening paragraph and by means of which it is possible to maintain high packaging rates.

The novel and unique feature whereby this is obtained according to the present invention is that the Tm of the inner layer is lower than the Tg of the outer layer, and that at least 50w% of the total polyolefin content of the outer layer is composed of at least one cycloolefin copolymer (COC).

An outer layer containing COC advantageously provide the resulting polyolefin packaging film with the necessary stiffness and stretch stability. To be able to form the obtained film with hot sealer bars at high packaging rates it is furthermore preferred to use COC with as high a Tg as possible.

If a film produced in this way is heated to, by using hot sealer bars, be made to adhere to itself or another thermoplastic polymer, the film can advantageously be heated without problems to or directly above the melting point of the inner layer without this at any time changing the physical properties of the very thermal resistant outer layer. The high COC content of the outer layer means that the outer layer maintains its stiffness, and the high COC content thus prevents the film from unintentionally being plastically deformed just as the outer layer never reaches a temperature that will make this outer layer adhere to the sealer bar.

The inner layer (sealing layer) can advantageously be of the same material as the unit to which the film is to be joined, but this is not a precondition as long as the two materials can melt together or adhere to each other so that an airtight sealing can be provided.

By choosing a thermoplastic polymer with a Tg exceeding the preferred sealer bar temperature, for example a Tg of about 120°C, preferably higher than 130°C, and especially higher than 140°C, for the outer layer (the layer in direct contact with the hot sealer bars), it is advantageously avoided that the outer layer adheres to the sealer bars. The film can be used at high packaging rates without the film being stretched and the film can easily be cut.

An expedient sealer bar temperature is furthermore determined on basis of the melting point(s) (Tm) of the inner layer and partly of Tm of the unit to which the inner layer is to be sealed.

Preferably a sealer bar temperature is chosen that is higher than the Tm of the inner layer and lower than the Tg of the outer layer but equal to or e.g. about 85°C so that the heat from the sealer bar nearest the outer layer can penetrate the film toward the inner layer and melt this to the unit without the outer layer being affected.

It is therefore an essential feature of the present invention that there is a significant temperature difference between the Tg of the outer layer and the Tm of the inner layer.

The polyolefin packaging film according to the present invention is however not limited to use for heat sealing to foodstuff packagings as many other products and items can be packed between mutually sealed thermoplastic polymer films.

In the preferred embodiment the outer layer and optionally the inner layer comprise a cycloolefin copolymer (COC), and both layers optionally contain an amount of non-cyclic polyolefin. Within the scope of the invention the inner layer can therefore alternatively be made of 100w% non-cyclic polyolefins such as e.g. PE, PB, or PP.

Usable COCs are marketed by e.g. Ticona GmbH, Frankfurt am Main, Germany. These COCs are constructed of the monomers 2-norbornene and ethylene and are amorphous, crystalline thermoplastics that remain amorphous during the process steps such as e.g. thermal stress and stretching processes.

Furthermore COCs have very good barrier properties to water and water vapour, medium barrier properties to O₂, are resistant to acids, bases, and polar solvents, and can be sterilized. The COCs produced by Ticona are approved for foodstuff by the EU, Switzerland, and the U.S.A. They are transparent and rigid, that is have a high modulus of elasticity (E modulus) at drawing, low elongation at break and high surface hardness (Customized Conversion, Topas packaging films with specific properties, Ekkehard Beer, Wolfram Goerlitz and Dirk Heukelbach, Ticona Gmbh, Frankfurt am Main/Germany, Pack Report 10/2000).

According to the present invention these COCs are advantageously used at least in the outer layer and optionally in the inner layer of a multi-ply polyolefin packaging film that can be used for packaging of especially foodstuff.

A layer of 100% COC has been found to be able to be stretched about 3-10% without the film breaking or delaminating (Ticona, published August 1998). Even if such a stretchability is acceptable for many applications, a stretchability of this order can in some applications mean a risk fatigue areas occurring in the film and possibly film breakage.

To reduce the risk of the polyolefin packaging film according to the invention breaking or delaminating when many units are to pass a set of sealer bars in a short time, that is at high packaging rates, the polyolefin packaging film can therefore, in one embodiment, be constructed with a COC-containing layer that also has a content of a non-cyclic polyolefin, such as polyethylene, polypropylene and/or polybutylene that all are inexpensive, commercially available thermoplastic polymers.

At least one of the inner layer or the outer layer can thus furthermore advantageously comprise at least one non-cyclic polyolefin, selected from the group comprising homopolymers of ethylene, propylene, and butylene, copolymers and terpolymers based on ethylene, propylene, or butylene, in combination with nonpolar or polar comonomers such as ethylene, propylene, butylene, hexene, 4-methylpentene, octene, vinyl acetat, acrylic acid, methacrylic acid, butyl acrylate, isobutyl acrylate, ethyl acrylate, methyl acrylate, and methyl-methyl acrylate. This content of non-cyclic polyolefins reduces the inexpedient break risk of the layers and thereby the film. However, the necessary stretch stability of the packaging film is kept and the adhering tendency to the sealer bars avoided.

The non-cyclic polyolefin content in the outer layer is preferably less than 50w% of the total polyolefin content of the COC-containing layer, in particular less than 25w%, but especially 0-15w%.

Especially preferred cycloolefin copolymers for the outer layer are selected from the group consisting of the TOPAS® resins 5013, 6013, 6015, 6017 that all have very high Tg values. The higher the Tg, the higher the Heat Deflection Temperature (HDT/B), where HDT is defined as the temperature above which the physical properties of the plastic are reduced. TOPAS® resin 8007 which has a low Tg can furthermore be used to a great extent in all the layers of the film except the outer layer.

The relevant advantageous physical properties of the TOPAS® resins are collected in Table 1 below:

**Table 1**

| **Topas® resin** | **Tg (°C)** | **HDT/B*(°C)** | **Modulus of elasticity in longitudinal direction (N/mm**^{**2**}**)** |
|---|---|---|---|
| 5013 | about 135 | 130 | 3100 |
| 6013 | about 135 | 130 | 3200 |
| 6015 | about 155 | 150 | 3200 |
| 6017 | about 180 | 170 | 3200 |
| 8007 | about 80 | 75 | 2600 |

| | | | |
|---|---|---|---|
| * HDT values are the ones stated by Ticona as determined according to ISO 80,parts 1/2, on a test unit of 80 x 10 x 4 mm according to ISO 3167 | | | |

Advantageously at least one additional layer can be inserted between the inner layer and the outer layer.

This additional layer can e.g. be an oxygen barrier and comprise a polymer selected from the group consisting of cycloolefin copolymer (COC), COC blended with non-cyclic polyethylene, polypropylene and/or polybutylene, ethylene vinyl alcohol copolymer (EVOH), polyamide, polyester or combination of these materials. The type of oxygen barrier is selected in dependence of the requirement to the oxygen barrier properties of the polyolefin packaging film.

Alternatively the at least one additional layer can be a water vapour barrier, a binding layer or a filler layer and comprise one or more of the compounds selected from the group of COC, non-cyclic polyethylene, polypropylene or polybutylene, optionally branched or copolymerised with an anhydride compound.

For some long-life products, such as nuts or coffee, or perishable foodstuff, such as fish, meat, and bread, a foodstuff packaging with an ultrahigh oxygen barrier of about 1,0 ml O₂/24 h/m²/ATM O₂ at 23°C and 0% Rh is normally required. In this case for example the inclusion of an EVOH layer of about 3-6 µm is suitable.

Foodstuff packagings with high oxygen barriers of about 10 ml O₂/24 h/m²/ATM O₂ at 23°C and 0% Rh can for example be obtained by inclusion of a polyvinylidene chloride (PVdC) coated biaxially oriented polyester (polyethylene terephthalate) (OPET). High oxygen barriers are applicable for foodstuff which is a little less oxygen sensitive, such as e.g. some types of meat products like pâté and ham.

Foodstuff packagings with medium oxygen barrier are typically used for cheese and can for example be obtained by inclusion of a 15 µm thick biaxially oriented polyamide (OPA) which provides an oxygen barrier of about 30 - 50 ml O₂/24 h/m²/ATM O₂ at 23°C and 0% Rh.

Foodstuff packagings with a low oxygen barrier are used to a small extent for e.g. cheese and meat and can for example be obtained by inclusion of a 12 µm thick OPET which provides an oxygen barrier of about 100 ml O₂/24 h/m²/ATM O₂ at 23°C and 0% Rh.

Foodstuff packagings with ultralow oxygen barriers are adequate for e.g. some types of the products snacks, frozen foodstuff products, tobacco, powder products and biscuits that are less oxygen sensitive, and can for example be obtained by using a 50 - 100 µm thick film of e.g. PE, PB, or PP, which provides an oxygen barrier of about 2000 - 5000 ml O₂/24 h/m²/ATM O₂ at 23°C and 0% Rh.

For comparison, a 100w% COC-containing film of about 50 µm has oxygen barrier properties of between 460 - 800 ml O₂/24 h/m²/ATM O₂ at 23°C and can in itself be used as oxygen barrier.

The COC-containing layer has better water and water vapour barrier properties than various types of non-cyclic PE, PP, and PB, which advantageously can be utilized for e.g. packing of tobacco and hygroscopic products such as e.g. medical tablets.

The polyolefin packaging film according to the present invention is manufactured by means of plastic film techniques known to a person skilled in the art such as blown co-extrusion from e.g. a tubular die, or flat sheet or (cast) co-extrusion to thereby co-extrude the thermoplastic polymers or combinations of thermoplastic polymers forming the individual film layers to a resulting effectively adhering film according to the invention.

In a preferred embodiment of the polyolefin packaging film according to the present invention one or more of the physical properties of the layers, such as transparency, gas permeability, stretchability, stiffness, tensile strength or elongation at rupture, can be modified by mono-orienting or biaxially-orienting the polyolefin packaging film according to the present invention.

Mono-orienting the molecular chains expediently takes place by stretching the film in the longitudinal direction, that is the machine direction. A biaxial-orienting is obtained by further stretching the film crosswise to this direction, that is in the cross direction.

The polyolefin packaging film according to the present invention can for example be processed and used on high-speed vertical form, fill, and seal packaging machines, (VFFS) from e.g. Robert Bosch Corporation, Bridgman, MI 49106, USA and Rovema Packaging Machines Ltd., Lawrenceville, GA 30045, US, or on high-speed horizontal form, fill, and seal packaging machines, (HFFS) from e.g. Hayssen, Inc. Duncan, SC 29334, USA and Fuji Packaging A/S, DK-6400 Sønderborg, or on sheet cutoff machines from e.g. Robert Bosch Corporation, or pouch packaging machines or deep drawing machines from e.g. MULTIVAC A/S, DK-7100 Vejle and Tiromat Packaging Systems, D-35216 Biedenkopf-Wallau, Germany.

The polyolefin packaging film according to the present invention is an advantageous alternative to the less environmentally acceptable adhesive-laminated plastic films that are utilized today when high packaging rates are wanted. By e.g. using COC in the outer layer and the inner layer possibly combined or blended with non-cyclic polyolefins, such as PP and PE in the rest of the structure, an environmentally acceptable polyolefin packaging film can be produced that meet the packaging requirements made on a packaging film so that this film can be used for packing of foodstuff. At the same time the total film thickness of this film is smaller than the total thickness of adhesive-based plastic laminates or co-extruded packaging films used for the same purpose.

### Examples

### Abbreviations:

- OPET:: Bi-oriented polyester
- PE:: Polyethylene
- LDPE:: Low Density Polyethylene
- LLDPE:: Linear Low Density Polyethylene
- EVOH:: Ethylene Vinyl Alcohol
- POP:: Polyolefin plastomer, (Polyolefin Plastomer, a copolymer polyethylene based on ethylene and octene (Affinity PL 1880 made by Dow Chemical by using a single site catalyst)

### Example 1 (Comparative example, known seven-layer plastic laminate)

64 µm thick plastic laminate used for packaging of sausages on a horizontal packaging machine. The sausages are packed in a protective atmosphere of CO₂ + N₂. The plastic laminate has the layer composition shown in Table 2 below.

**Table 2**

| **Layer number** | **Layer thickness in µm** | **Layer composition** | **modulus of elasticity (MPa)** |
|---|---|---|---|
| 1 (outer layer in contact with sealer bars) | 12 | OPET | 4350 |
| 2 (adhesive layer) | 2 | 2-component polyurethane-based adhesive | 250 |
| 3 (filler layer) | 19 | PE | 250 |
| 4 (binding layer/tie layer) | 4 | Polyethylene-containing binding layer | 250 |
| 5 (oxygen barrier) | 4 | EVOH | 1100 |
| 6 (binding layer/tie layer) | 4 | Polyethylene-containing binding layer | 250 |
| 7 (inner layer, sealing layer with possible contact to packed product) | 19 | LLDPE | 250 |

Layers 3-7 are a blown 5-layer co-extruded polymer film laminated to layer 1 by means of the adhesive in layer 2.

OPET in the outer layer (layer 1) has a high modulus of elasticity of about 4350 MPa, which is a condition for giving the plastic laminate stiffness and stretch stability so that the plastic laminate is not stretched on the packaging machine on feed. OPET has a melting point of about 255°C which means that the outer layer is thermostable and therefore will not adhere to the sealer bars. OPET has been thermally stabilized in the production process, which is why OPET will not shrink significantly during the sealing operation.

Layer 2 is used to join layer 1 and the 5-layer co-extruded polymer film by adhesive bonding to a laminate.

The inner layer (layer 7) is composed of LLDPE with two DSC (Differential Scanning Colorimetry) melting points of about 109°C and about 119°C respectively. LLDPE is thus joined to itself at a relatively low sealing temperature without layer 1's properties being affected. The LLDPE sealing layer has good hottack properties and gives the hot sealing high strength immediately after sealing so that the sealing cannot be opened unintentionally by the gas pressure from the supplied protective atmosphere in the packaging process.

### Example 2 (Plastic film according to the invention)

A film according to the present invention having mainly corresponding sealing properties and the same stretch stability and stiffness as the plastic laminate according to Example 1 is produced either by cast or blown extrusion and has the layer structure shown in Table 3 below:

**Table 3**

| **Layer number** | **Layer thickness in µm** | **Layer composition** | **Elastic modulus (MPa)** |
|---|---|---|---|
| 1 (outer layer in contact with sealer bars) | 12 | (90w% Topas® 6013 + 10w% LDPE) | 2905¹ |
| 2 (binding layer/ tie layer) | 4 | Polyethylene-containing binding layer | 250 |
| 3 (oxygen barrier) | 4 | EVOH | 1100 |
| 4 (binding layer/ tie layer) | 4 | Polyethylene-containing binding layer | 250 |
| 5 (inner layer, sealing layer with possible contact to packed product) | 27 | (35w% Topas® 8007 + 65w% POP) | 975² |

| | | | |
|---|---|---|---|
| 1) (90w% Topas® 6013 + 10w% LDPE) => (0,9 x 3200 + 0,1 x 250) MPa = 2905 MPa | | | |
| 2) (35w% Topas® 8007 + 65w% POP) => (0,35 x 2600 + 0,65 x 100) MPa = 975 MPa | | | |

The film which is only 51 µm thick can be used for packing the same foodstuff as the known plastic laminate according to Example 1.

Layer 1 is composed of 90w% Topas® 6013 and 10w% LDPE. Topas® 6013 has a high Tg of about 135°C, a high modulus of elasticity of about 3200 MPa and an elongation at rupture of about 4%. The high modulus of elasticity of Topas® 6013 gives the film stiffness and stretch stability so that the film is not stretched on the packaging machine on feed. The high Tg gives the film the necessary thermostability so that the outer layer will not adhere to the sealer bars and so that the stretch stability and stiffness are maintained in the hot sealing, which also facilitate cutting.

The sensitivity to tensile stresses, that is risk of breakage upon normal handling, can be reduced by adding LDPE.

The inner layer (layer 5) is composed of 35w% Topas® 8007 and furthermore 65w% POP having a melting point of about 102°C and a low modulus of elasticity of about 100 MPa, which give the inner layer fine sealing properties.

The POP sealing layer has good hottack properties and the hot sealing thus has a high tensile strength immediately after sealing so that the sealing will not be opened unintentionally by the gas pressure from the supplied protective atmosphere in the packaging process. Topas® 8007 provides the entire film with further stiffness without destroying the possibility of application at a low sealing temperature.

The layer thicknesses of the film according to the present invention are calculated so that the total stiffness of the film, that is bending stiffness, corresponds to the stiffness of the plastic laminate and simultaneously meets other packaging requirements. Topas® 8007 reduces the total thickness of the film, as the total stiffness of the film increases on increased addition of COC 8007. The stiffness is defined as the maximum force, in mN, it takes to bend a film specimen having a determined dimension about a vertical shaft a certain number of degrees and at a determined distance from the shaft. An associated test method for bending stiffness is described in the standard SCAN-P 29:69 (SCAN = Scandinavian Pulp, Paper and Board Testing Committee).

The thickness of the plastic laminate of about 64 µm can thus be reduced to about 51 µm by application of this polyolefin film according to the present invention without changing the total stiffness.

Instead of Topas® 6013, COCs having a higher Tg can be used, which gives a higher temperature difference between the Tg of the outer layer and the Tm of the inner layer. Hereby even higher sealing temperatures can be used, which means a shorter necessary sealing time to melt the inner layer sufficiently, which gives higher rates of the packaging machine.

## Claims

1. A polyolefin packaging film of the kind that comprises an outer layer and an inner layer wherein the inner layer and outer layer have a content of a thermoplastic polyolefin, **characterized in**
- **that** the Tm of the inner layer is lower than the Tg of the outer layer, and
- **that** at least 50w% of the total polyolefin content of the outer layer is composed of at least one cycloolefin copolymer (COC).

2. A polyolefin packaging film according to claim 1, **characterized in that** preferably at least 75w%, but especially 85w% of the polyolefin of the outer layer is composed of the at least one COC.

3. A polyolefin packaging film according to claim 1 or 2, **characterized in that** the Tg of the outer layer is equal to or higher than about 120°C, preferably higher than 130°C, and especially higher than 140°C, and that the Tm of the inner layer preferably is higher than or equal to about 85°C.

4. A polyolefin packaging film according to any of the claims 1 - 3, **characterized in that** the inner layer comprises a cycloolefin copolymer (COC).

5. A polyolefin packaging film according to any of the claims 1 - 4, **characterized in that** the outer layer and/or the inner layer furthermore comprise at least one non-cyclic polyolefin, selected from the group comprising homopolymers of ethylene, propylene, and butylene, copolymers and terpolymers based on ethylene, propylene, or butylene, in combination with non-polar or polar comonomers such as ethylene, propylene, butylene, hexene, 4-methyl pentene, octene, vinyl acetate, acrylic acid, methacrylic acid, butyl acrylate, isobutyl acrylate, ethyl acrylate, methyl acrylate, and methyl-methyl acrylate.

6. A polyolefin packaging film according to any of the claims 1 - 5, **characterized in that** the cycloolefin copolymer is selected from the group consisting of the TOPAS® resins 5013, 6013, 6015, 6017, and 8007.

7. A polyolefin packaging film according to any of the claims 1 - 6, **characterized in that** at least one additional layer is inserted between the inner layer and the outer layer, selected from the group consisting of layers forming an oxygen barrier, filler layer, binding layer, or water vapour barrier.

8. A polyolefin packaging film according to claim 7, **characterized in that** the at least one oxygen barrier comprises a polymer selected from the group consisting of COC, COC blended with non-cyclic polyethylene, polypropylene, and/or polybutylene, ethylene vinyl alcohol copolymer, polyamide, polyester, or combinations of these materials.

9. Polyolefin packaging film according to claim 7, **characterized in that** the at least one binding layer, water vapour barrier layer or filler layer comprise COC, non-cyclic polyethylene, polypropylene, or polybutylene, optionally branched or co-polymerized with an anhydride compound, or combinations of these compounds.

10. A method for producing a polyolefin packaging film according to any of the claims 1 - 9, **characterized in that** the method comprises
- co-extruding of the thermoplastic polymers or compositions of thermoplasic polymers that form the individual film layers to a resulting adhering polyolefin film by means of blown co-extrusion or flat sheet co-extrusion, and
- optionally mono-orienting the polyolefin packaging film or orienting the polyolefin packaging film biaxially by stretching.
